# EUROPÄISCHE PATENTSCHRIFT

(11) **EP 2 808 986 B1**
(45) Veröffentlichungstag und Bekanntmachung des Hinweises auf die Patenterteilung: **09.03.2016**
(21) Anmeldenummer: 13169363.2
(22) Anmeldetag: 27.05.2013
(51) Int. Cl.: H02K 41/03, H02K 3/24, H02K 7/14, H02K 3/47

(54) **Kühlkörper für einen Linearmotor**
Cooling body for a linear motor
Corps de refroidissement pour moteur linéaire

(43) Veröffentlichungstag der Anmeldung: 03.12.2014
(73) Patentinhaber: ETEL S.A., 2112 Môtiers (CH)
(72) Erfinder: Da Conceição Rosa, André-Rafael, 2300 La Chaux-de-Fonds (CH)
(74) Vertreter: Maikowski & Ninnemann

(56) Entgegenhaltungen:
- EP-A1- 1 544 988
- WO-A1-03/005538
- CN-U- 201 854 167
- JP-A- 2004 304 932
- US-A1- 2006 049 700
- US-A1- 2006 091 732

## Beschreibung

Die Erfindung betrifft einen Kühlkörper für das Primärteil eines Linearmotors nach dem Oberbegriff des Anspruchs 1 sowie einen Linearmotor mit einem solchen Kühlkörper gemäß Anspruch 14.

Linearmotoren werden zunehmend eingesetzt, wenn es um eine hochgenaue und gegebenenfalls auch schnelle Positionierung von Objekten, wie zum Beispiel eines Maschinenteiles einer Werkzeugmaschine, geht. Dabei kann das Primärteil des Linearmotors über eine geeignete Schnittstelle unmittelbar mit dem zu bewegenden Maschinenteil oder sonstigen Objekt verbunden sein. Das heißt, im Gegensatz zu einem konventionellen Rotationsmotor entfällt hier die Notwendigkeit eines zwischen den Linearmotor und das anzutreibende Objekt geschalteten Getriebes.

Für Anwendungen, die eine besonders präzise Positionierung erfordern, eignen sich vor allem so genannte eisenlose Linearmotoren, bei denen der mindestens einen am Primärteil vorgesehenen Spule kein Eisenkern zugeordnet ist. Hierdurch lassen sich störende Rastmomente vermeiden. Es sind jedoch entsprechend größere Spulenströme erforderlich, um auch ohne Eisenkern hinreichend große Kräfte am Primärteil des Linearmotors erzeugen zu können. Dies erfordert wiederum eine entsprechend gute Kühlung der Spule(n) (nachfolgend auch allgemein als Spulenanordnung bezeichnet).

Bei einem eisenlosen Linearmotor kann der Kühlkörper zugleich als Aufnahme für die Spulenanordnung des Primärteiles dienen. Ein derartiger eisenloser Linearmotor ist beispielsweise aus der US 7,057,313 B2 bekannt.

Weiterhin ist aus der EP 1 544 988 ein einstückiger Kühlkörper zu dem eingangs genannten Zweck bekannt.

In der US 2006/0091732 A1 ist ein eisenloser Linearmotor mit einem zugehörigen mehrteiligen Kühlkörper beschrieben.

Der Erfindung liegt das Problem zugrunde, einen Kühlkörper der eingangs genannten Art weiter zu verbessern, um insbesondere mit möglichst geringem Aufwand eine effektive Kühlung zu erreichen.

Dieses Problem wird erfindungsgemäß durch die Schaffung eines Kühlkörpers mit den Merkmalen des Anspruchs 1 gelöst.

Danach wird der Kühlkörper durch ein einzelnes, einstückig geformtes Bauteil gebildet, welches sowohl zur Kühlung der mindestens einen Spule (Spulenanordnung) des Primärteiles als auch zur Kühlung einer der Anbindung des zu bewegenden Objektes dienenden Schnittstelle des Kühlkörpers ausgebildet und vorgesehen ist, insbesondere einer Kontaktfläche jener Schnittstelle (und somit des Kühlkörpers), über welche das mit dem Primärteil zu bewegende Objekt bestimmungsgemäß an den Kühlkörper anzulegen ist. Hierzu ist der Kühlkörper derart ausgeführt, dass an einem Einlass des Kühlkörpers eingelassenes Kühlmittel, z.B. in Form einer Kühlflüssigkeit, sowohl zur Kühlung der mindestens einen Spule als auch der Schnittstelle bzw. Kontaktfläche dient. Das heißt, der Kühlkörper definiert einen gemeinsamen, einheitlichen Kühlkreislauf sowohl für die zu kühlenden Spulen als auch für die zu kühlende Schnittstelle/Kontaktfläche. Es wird also kein separates Kühlmittel zur Kühlung der Spulenanordnung einerseits und der Kontaktfläche andererseits verwendet. Insbesondere kann der Kühlkörper insgesamt somit genau einen Einlass für das Kühlmittel und genau einen Auslass für das Kühlmittel aufweisen.

Der Kühlkörper mit den darin ausgebildeten Kanälen ist dabei so ausgeführt, dass das dem Kühlkörper zugeführte Kühlmittel zunächst die Schnittstelle/Kontaktfläche und anschließend die Spule(n) des Primärteiles kühlt. Hierbei wird das Kühlmittel in den Kanälen des Kühlkörpers entlang der Spule(n) geführt. Anschließend wird das Kühlmittel vorteilhaft über einen Auslass entnommen, ohne nochmals mit dem Bereich (Eingangsbereich) des Kühlkörpers in Kontakt zu geraten, über den das Kühlmittel zunächst zur Kühlung der Schnittstelle/Kontaktfläche des Primärteiles (genauer: des Kühlkörpers) bereitgestellt wird.

+Dadurch dass das zu bewegende Objekt an den Kühlkörper (als einen Bestandteil des Primärteiles des Linearmotors) anzubinden ist und die entsprechende Kontaktfläche des Kühlkörpers gekühlt wird, lässt sich ein unerwünschter Wärmeeintrag (von Motorwärme) in das zu bewegende Objekt zuverlässig vermeiden.

Ein solcher Kühlkörper, der insbesondere plattenförmig (als eine Kühlplatte) ausgeführt sein kann, lässt sich zum Beispiel durch so genannten 3D-Druck herstellen, also mittels eines 3D-Druckers, der den Kühlkörper aus einem oder mehreren fluiden oder pulverförmigen Werkstoffen mit bestimmten Maßen und Formen erzeugt. Es kommen aber auch andere Verfahren für die Herstellung eines einstückig geformten Kühlkörpers in Betracht, wie zum Beispiel das stoffschlüssige Verbinden, insbesondere Verschweißen, mindestens zweier Plattenteile (Plattenhälften), in die zuvor zur Bildung von Kanälen für das Kühlmittel Nuten eingebracht (z.B. gefräst) wurden.

D.h., unter einem einstückig geformten Kühlkörper wird hier ein solcher verstanden, der als ein Bauteil in einem formgebenden Verfahren (ohne zusätzliche, nachträgliche Verbindungsschritte zwischen einzelnen Komponenten des Kühlkörpers) hergestellt worden ist oder bei dem allenfalls zusätzliche stoffschlüssige Verbindungen (z.B. Schweißverbindungen) zwischen Komponenten des Kühlkörpers vorgesehen sind. Hierbei wird die erste Alternative, insbesondere in Form eines durch 3D-Druck hergestellten Kühlkörpers, als besonders vorteilhaft angesehen. Die maßgeblichen Komponenten eines Kühlkörpers, welche das einstückige Bauelement bilden, sind dabei diejenigen, die das Kühlmittel aufnehmen und in dem Kühlkörper leiten, also insbesondere die Außenwände des Kühlkörpers und die im Kühlkörper ausgebildeten Kanäle für das Kühlmittel.

Die erfindungsgemäße Lösung ermöglicht die Kühlung nicht nur der Spule(n) des Primärteiles sondern darüber hinaus auch der Schnittstelle, über welche das Primärteil mit einem durch den Linearmotor zu bewegenden Objekt in Verbindung steht, insbesondere der entsprechenden Kontaktfläche des Kühlkörpers, mit nur einem Bauteil, d. h., ohne substanziell größeren Aufwand als für die Kühlung nur der Spulenanordnung ohnehin erforderlich wäre. Durch die zusätzliche Kühlung der Schnittstelle/Kontaktfläche lässt sich dabei ein Wärmeübertrag in das zu bewegende Objekt, z. B. in Form eines Maschinenteiles, vermeiden.

Als Material für den Kühlkörper eignet sich Titan, welches als Metall eine hohe Wärmeleitfähigkeit bei gleichzeitig vergleichsweise großem spezifischem Widerstand aufweist, welch letzterer der Erzeugung von Wirbelströmen in den Kühlkörpern entgegenwirkt. Weitere geeignete Materialien sind beispielsweise Edelstahl oder (elektrisch isolierende, Wasser nicht absorbierende) keramische Werkstoffe, wie z.B. in der US-A 7,057,313 beschrieben.

Vorteilhaft sind nicht nur der Kühlmitteleinlass und der Kühlmittelauslass (z.B. in Form einer Eintritts- bzw. Austrittsöffnung) sondern auch der jeweils zugehörige Anschlussbereich, über den eine Zuleitung bzw. eine Ableitung für das Kühlmittel an den Einlass bzw. Auslass anschließbar ist, einstückig an dem Kühlkörper angeformt.

Weiterhin können an dem Kühlkörper Befestigungselemente einstückig angeformt sein, über welche die mindestens eine Spule des Primärteiles an dem Kühlkörper festlegbar ist. Die Befestigungselemente können beispielsweise als Rastelemente ausgebildet sein, über die sich ein jeweiliger Spulenkörper an dem Kühlkörper verrasten lässt, oder auch als Befestigungsöffnungen. Durch eine definierte Festlegung der Spule(n) am Kühlkörper, insbesondere unter Erzeugung eines gewissen Anpressdruckes, kann ein definierter Wärmeübergang zwischen einer jeweils zu kühlenden Spule und dem Kühlkörper sichergestellt werden.

Konkret kann der Kühlkörper so ausgestaltet sein, dass er einen dem Kühlmitteleinlass nachgeordneten Eingangsbereich aufweist, in welchen das über den Einlass zugeführte Kühlmittel zunächst einströmt. Von diesem Eingangsbereich können die Kanäle abgehen, über welche das Kühlmittel entlang der zu kühlenden Spule(n) des Primärteiles geführt wird. Darüber hinaus kann der Eingangsbereich unmittelbar zur Kühlung der besagten Kontaktfläche genutzt werden, indem letztere an dem Eingangsbereich ausgebildet ist. Die entlang des zu kühlenden Primärteiles geführten Kanäle münden wiederum in einem Ausgangsbereich des Kühlkörpers, aus welchem das (nunmehr erwärmte) Kühlmittel über einen Kühlmittelauslass entnommen wird.

Der Eingangsbereich und der Ausgangsbereich des Kühlkörpers können nebeneinander angeordnet sein, jedoch vorteilhaft ohne miteinander in körperlichem Kontakt zu stehen. D. h., der Eingangs- und Ausgangsbereich des Kühlkörpers sind bevorzugt voneinander beabstandet. Zusätzlich kann ein nicht-wärmeleitendes Material zwischen dem Eingangs- und dem Ausgangsbereich des Kühlkörpers vorgesehen sein, um einen Wärmeaustausch zu vermeiden.

Gemäß einer Ausführungsform können sind der Eingangs- und/oder der Ausgangsbereich des Kühlkörpers als ein längserstreckter hohler Abschnitt ausgeführt, von welchem die Kanäle des Kühlkörpers (im Wesentlichen quer) abgehen bzw. in welchen die Kanäle des Kühlkörpers (im Wesentlichen quer) münden.

Vorteilhaft verlaufen entlang eines Spulenkörpers des Primärteiles jeweils mehrere Kanäle des Kühlkörpers, die sich nebeneinander erstrecken. Hierdurch lässt sich der Druckabfall entlang der Kanäle verringern. Ferner kann der Kühlmittelfluss in benachbarten Kanälen jeweils entgegengesetzt sein, um den Temperaturgradienten im Kühlkörper zu minimieren.

Zur Reduzierung des Druckabfalls entlang der Strömungsrichtung des Kühlmittels sind weiterhin die Kanäle und sonstige Bereiche des Kühlkörpers vorteilhaft so ausgestaltet, dass Hindernisse im Strömungsweg sowie Kurven mit geringen Radien möglichst vermieden werden.

Ein Linearmotor mit einem erfindungsgemäßen Kühlkörper ist durch die Merkmale des Anspruchs 14 charakterisiert.

Weitere Einzelheiten und Vorteile der Erfindung werden bei der nachfolgenden Beschreibung eines Ausführungsbeispieles anhand der Figuren deutlich werden.

Es zeigen:
- Fig. 1A: eine erste perspektivische Darstellung eines Kühlkörpers eines Primärteiles eines Linearmotors;
- Fig. 1B: eine zweite perspektivische Darstellung des Kühlkörpers aus Figur 1 A;
- Fig. 2: eine Stirnansicht eines Teilbereiches des Kühlkörpers aus den Figuren 1 A und 1B;
- Fig. 3: eine Draufsicht auf den Kühlkörper aus den Figuren 1A und 1B mit zusätzlich angedeuteten Verläufen von Kanälen innerhalb des Kühlkörpers;
- Fig. 4: einen Ausschnitt des Kühlkörpers aus den Figuren 1A und 1B;
- Fig. 5A: eine weitere Draufsicht auf den Kühlkörper aus den Figuren 1A und 1B mit detaillierterer Darstellung an dem Kühlkörper vorgesehener Befestigungsstellen;
- Fig. 5B: eine Seitenansicht des Kühlkörpers aus Figur 5A;
- Fig. 5C: ein vergrößerter Ausschnitt des Kühlkörpers aus den Figuren 5A und 5B im Bereich einer Befestigungsstelle;
- Fig. 5D: eine perspektivische Darstellung der Befestigungsstelle aus Figur 5C;
- Fig. 6: eine schematische Darstellung einer Anordnung eines Kühlkörpers zusammen mit einer Spulenanordnung eines Primärteiles eines Linearmotors.

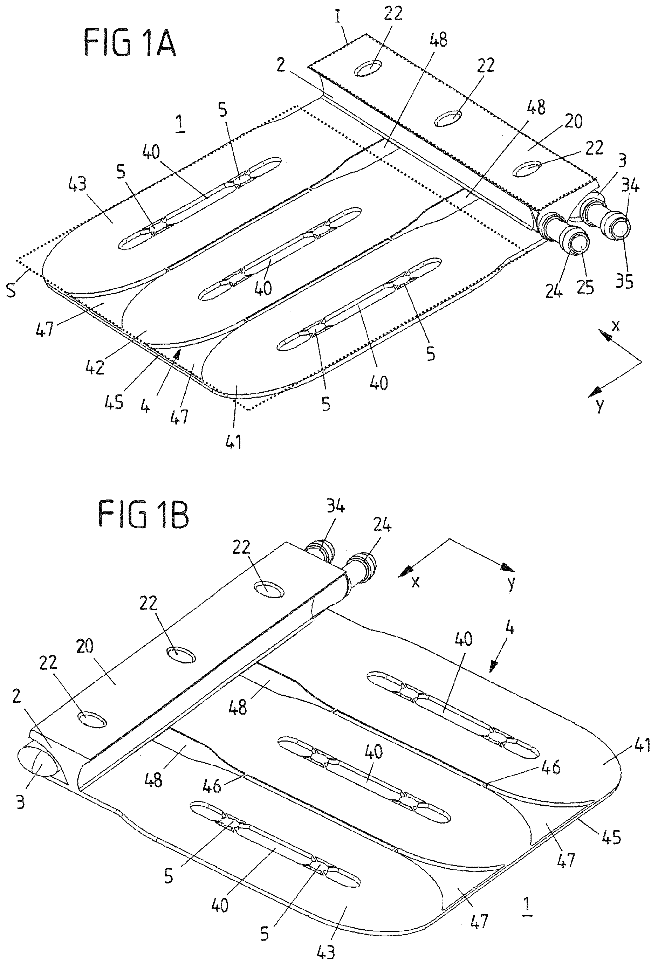

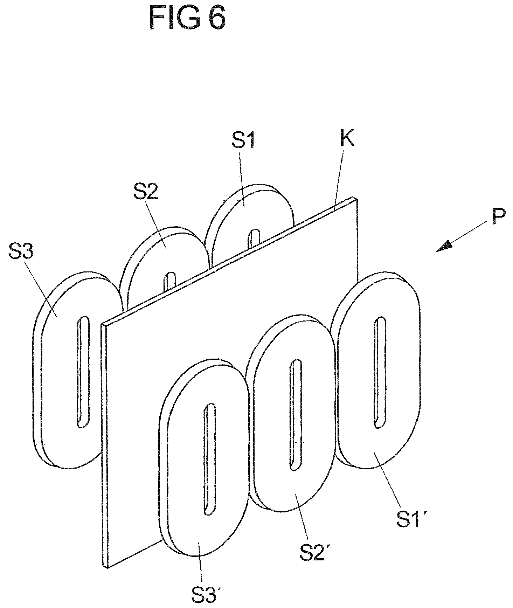

Figur 6 zeigt zur Illustration des technischen Hintergrundes des nachfolgend anhand der Figuren 1 bis 5D beschriebenen Ausführungsbeispieles eine Kühlplatte K, an der (beidseits, was jedoch nicht zwingend ist, oder aber nur einseitig) Spulen S1, S2, S3 bzw. S1', S2', S3' eines Primärteiles P eines Linearmotors angeordnet sind. Die flächigen Spulen S1, S2, S3; S1', S2', S3' bestehen jeweils aus einem Draht, z. B. Kupferdraht, der um eine zentrale Öffnung der jeweiligen Spule gewickelt ist. Die Wicklung der Spulen erfolgt vorteilhaft in der Weise, dass zwar viele Drähte flächig in einer Ebene nebeneinander liegen, aber nur eine oder wenige Lagen solcher Windungen senkrecht zur Spulenebene vorliegen. Eine solche Spulenform führt einerseits zu einem flachen Aufbau des Primärteils und ermöglicht andererseits einen großflächigen Kontakt mit dem - ebenfalls flächigen - Kühlkörper K in Form einer Kühlplatte.

Der Kühlkörper K weist in seinem Inneren Kühlkanäle auf, durch die hindurch im Betrieb des entsprechenden Motors eine Kühlmittel, insbesondere in Form einer Kühlflüssigkeit, strömt, um die Spulen S1, S2, S3; S1', S2', S3' zu kühlen, also insbesondere eine zu starke Erwärmung der Spulen als Folge des im Motorbetrieb durch die Spulen fließenden Stromes zu vermeiden. Da es sich bei dem in Figur 6 dargestellten Primärteil um ein sogenanntes eisenloses Primärteil handelt, übernimmt der Kühlkörper K weiterhin die Funktion der Aufnahme der Spulen S1, S2, S3; S1', S2', S3'.

Nachfolgend wird anhand der Figuren 1 bis 5B nunmehr eine vorteilhafte Ausgestaltung eines Kühlkörpers für ein (eisenloses) Primärteil eines Linearmotors näher erläutert werden.

In den Figuren 1A und 1B ist in zwei perspektivischen Darstellungen ein Kühlkörper 1 gezeigt, der zur Kühlung sowohl der Spulen S eines Primärteiles eines (eisenlosen) Linearmotors als auch einer Schnittstelle bzw. Kontaktfläche 20 dient, über die der Kühlkörper 1 mit dem durch den Linearmotor zu bewegenden und daher mit dem Primärteil zu verbindenden Objekt, insbesondere in Form eines Maschinenteiles, in Kontakt steht. Die Spulenanordnung S und die Schnittstelle I des weiteren Objektes (über welche das weitere Objekt an der primärteilseitigen Kontaktfläche 20 anliegt) sind dabei in Figur 1A gestrichelt angedeutet. Hinsichtlich eines möglichen Aufbaus der Spulenanordnung S sei beispielsweise auf die vorstehend erläuterte Figur 6 verwiesen.

Gemäß den Figuren 1A und 1B handelt es sich bei dem Kühlkörper 1 um ein einzelnes, einstückig geformtes Bauteil, das sowohl zur Kühlung der Spulenanordnung S als auch zur Kühlung der der zur Anlage des mit dem Primärteil zu bewegenden Objektes vorgesehenen Kontaktfläche 20 ausgebildet und vorgesehen ist.

Als Material für den Kühlkörper 1 eignet sich ein Metall mit guter Wärmeleitfähigkeit bei gleichzeitig vergleichsweise hohem spezifischen elektrischen Widerstand, wie z. B. Titan. Eine hinreichende Wärmeleitfähigkeit des Kühlkörpers gewährleistet die Ableitung der im Betrieb der Spulenanordnung S erzeugten Wärme in ein im Kühlkörper 1 befindliches Kühlmittel; und ein hinreichend großer spezifischer Widerstand wirkt der Entstehung von Wirbelströmen in dem Kühlkörper 1 entgegen.

Zur Herstellung des einstückig geformten Kühlkörpers 1, insbesondere aus Metall, eignet sich beispielsweise das 3D-Drucken. Eine alternative Möglichkeit für die Herstellung ist etwa das Verschweißen mindestens zweier Plattenteile (Plattenhälften), in die zuvor zur Bildung von Kanälen für das Kühlmittel Nuten eingebracht (z.B. gefräst) wurden.

Der Kühlkörper 1 weist hier wiederum als einen zentralen Bestandteil eine Kühlplatte 4 auf, um einerseits die Bauhöhe des Primärteiles zu minimieren und um andererseits einen möglichst großflächigen Kontakt mit der Spulenanordnung S des Primärteiles zu ermöglichen.

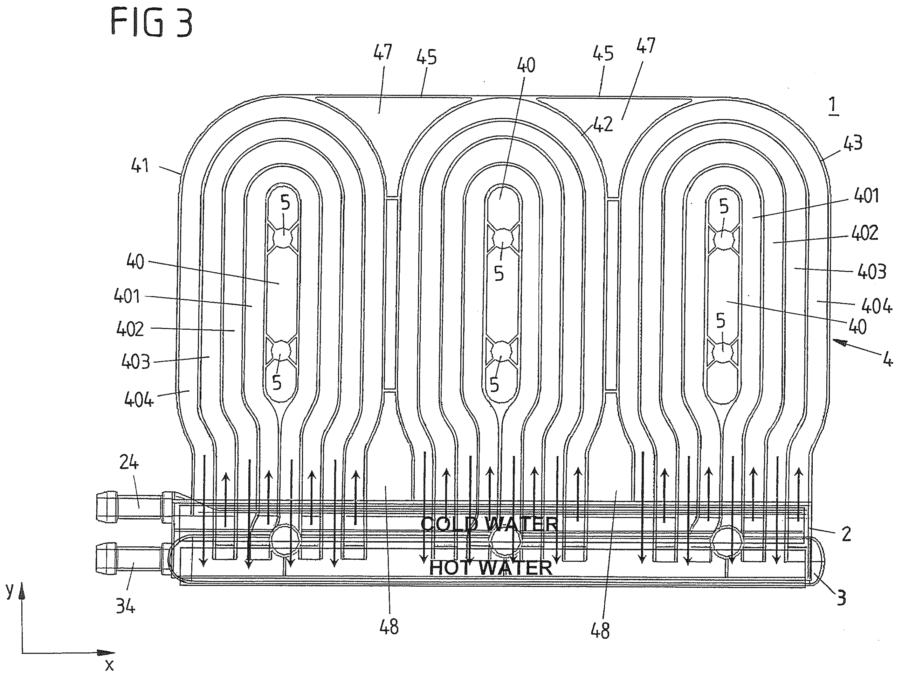

In dem Kühlkörper 6 verlaufen Kanäle für das Kühlmittel, die nachfolgend anhand Figur 3 noch näher beschrieben werden und die der definierten Leitung eines in den Kühlkörper eingelassenen Kühlmittels, insbesondere in Form einer Kühlflüssigkeit, sowohl entlang der Kontaktfläche 20 als auch entlang der Spulenanordnung S dienen.

Wie in den Figuren 1A und 1B erkennbar, weist der Kühlkörper 1 einen Eingangsbereich 2 mit einem Kühlmitteleinlass 25 und einen Ausgangsbereich 3 mit einem Kühlmittelauslass 35 auf. Sowohl der Kühlmitteleinlass 25 als auch der Kühlmittelauslass 35 sind dabei jeweils einstückig am Kühlkörper 1 oder genauer am Eingangsbereich 2 bzw. Ausgangsbereich 3 des Kühlkörpers 1 angeformt. Konkret sind der Einlass 25 und der Auslass 35 jeweils als ein Durchlass in einem einstückig am Kühlkörper angeformten Anschlussbereich 24 bzw. 34 ausgebildet. Der dem Einlass 25 zugeordnete Anschlussbereich 24 dient dabei zum Anschluss einer Zuleitung für ein Kühlmittel; und der dem Auslass 35 zugeordnete Anschluss 34 dient dem Anschluss einer Ableitung für das Kühlmittel. Dementsprechend ist der erste Anschluss 25 am Eingangsbereich 2 und der zweite Anschluss 35 am Ausgangsbereich 3 des Kühlkörpers 1 angeformt.

Der Eingangsbereich 2 verläuft (längserstreckt) neben der Spulenanordnung S des Primärteiles. Von ihm stehen seitlich Kühlschleifen 41, 42, 43 des Kühlkörpers 1 ab, die zur Kühlung der einzelnen Spulen der Spulenanordnung S dienen und die im Ausführungsbeispiel eine Kühlplatte 4 bilden. Die Kühlschleifen 41, 42, 43 sind dabei in der Ebene des Kühlkörpers 1, also in der von der Kühlplatte 4 aufgespannten xy-Ebene, nebeneinander angeordnet.

Der Eingangsbereich 2, welchem das Kühlmittel durch den Einlass 25 des Kühlkörpers 1 zugeführt wird, ist weiterhin so ausgestaltet, dass er die Kontaktfläche 20 für die Anlage eines mit dem Primärteil zu verbindenden und hierdurch zu bewegenden Objektes bildet. So kann das in den Eingangsbereich 2 des Kühlkörpers 1 eingelassene Kühlmittel zunächst zur Kühlung der Kontaktfläche 20 dienen.

Der Eingangsbereich 2 bildet vorliegend gemäß Ausführungsbeispiel die (komplette) primärteilseitige Schnittstelle, über die das Primärteil mit jenem Objekt verbunden wird. Hierzu sind am Eingangsbereich 25 Befestigungsstellen 22 in Form von Befestigungsöffnungen ausgebildet. Diese münden in die Kontaktfläche 20, über die der Kühlkörper 1 an dem hiermit zu verbindenden Objekt bzw. dessen Schnittstelle I anliegt.

Von dem Eingangsbereich 2 aus gelangt das Kühlmittel in die seitlich hiervon abstehenden Kühlschleifen 41, 42, 43 des Kühlbereiches 4, an welchen die Spulen (vergleiche etwa Figur 6) der Spulenanordnung S (einseitig oder beidseits) anliegen.

Anhand einer Zusammenschau der Figuren 1A, 1B und 3 wird deutlich, dass von dem Eingangsbereich 2 des Kühlkörpers 1 mehrere, vorliegend drei, Kühlschleifen 41, 42, 43 abstehen, die jeweils flächig ausgebildet sind und die jeweils eine Öffnung 40 umschließen. Jede dieser Kühlschleifen ist zur Kühlung einer Spule oder zweier einander gegenüberliegender Spulen des Primärteiles vorgesehen, welche an der jeweils zugeordneten Kühlschleife 41, 42 oder 43 anzuordnen ist/sind.

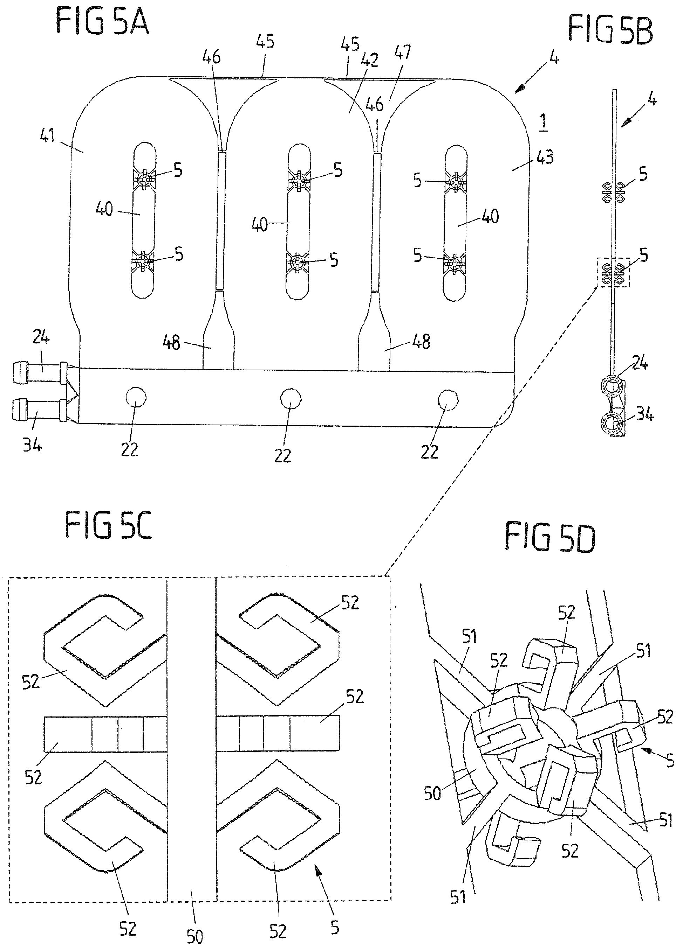

Zur Befestigung der Spulen an dem Kühlkörper 1 bzw. an einer jeweiligen Kühlschleife 41, 42, 43 dienen am Kühlkörper 1 bzw. genauer an den Kühlschleifen 41, 42, 43 (und dort jeweils innerhalb der zugehörigen Öffnung 40) angeformte Befestigungselemente 5, die weiter unten anhand der Figuren 5A bis 5D noch näher beschrieben werden. Vorteilhaft ist eine Befestigung der einzelnen Spulen an dem Kühlkörper 1 bzw. an der jeweiligen Kühlschleife 41, 42, 43 mit einem gewissen Anpressdruck, um den Wärmeübertrag zwischen der Spule und dem Kühlkörper zu optimieren.

In der Draufsicht gemäß Figur 3 ist der Kühlkörper 1, insbesondere dessen Kühlbereich 4, teilweise durchscheinend dargestellt, so dass die innerhalb des Kühlkörpers gebildeten Kanäle sichtbar werden. Danach bildet jede der Kühlschleifen 41, 42, 43 mehrerer (vier) Kanäle 401, 402, 403, 404, die jeweils die zentrale Öffnung 40 der jeweiligen Kühlschleife umgeben und die radial (von innen nach außen, bezogen auf die jeweilige zentrale Öffnung 40) nebeneinander angeordnet sind. Jeder der Kanäle 401, 402, 403, 404 geht von dem Eingangsbereich 2 des Kühlkörpers 1 ab, umschließt sodann die zentrale Öffnung 40 einer jeweiligen Kühlschleife 41,42,43 und mündet anschließend in den Ausgangsbereich 3 des Kühlkörpers 1, an welchem der Kühlmittelauslass 34 vorgesehen ist.

Im Betrieb des in den Figuren 1A, 1B und 3 dargestellten Kühlkörpers zum Kühlen einer Spulenanordnung S des Primärteils eines Linearmotors und einer Kontaktfläche 20 zu Anlage eines hiermit zu verbindenden Objektes ist an den einen, eingangsseitigen Anschluss 24 des Kühlkörpers 1 eine Zuleitung angeschlossen, mittels welcher dem Kühlkörper 1 über den am eingangsseitigen Anschluss 24 gebildeten Einlass 25 ein Kühlmittel, insbesondere eine Kühlflüssigkeit, z. B. in Form von Wasser, zugeführt wird. Dieses strömt sodann in den Eingangsbereich 2 des Kühlkörpers 1, der sich im Ausführungsbeispiel entlang einer ersten Richtung x erstreckt. Bereits innerhalb des Eingangsbereiches dient das Kühlmittel zur Kühlung der Kontaktfläche 20. Die Richtung, entlang der das über den Einlass 25 zugeführte Kühlmittel innerhalb des Eingangsbereiches 2 entlang der Kontaktfläche 20 strömt, ist dabei durch die Erstreckungsrichtung x des Eingangsbereiches 2 vorgegeben.

Aus dem Eingangsbereich 2 gelangt das Kühlmittel in die seitlich hiervon abstehenden Kühlschleifen 41, 42, 43, genauer in die einzelnen Kanäle 401, 402, 403, 404, welche in den Kühlschleifen 41, 42, 43 jeweils ausgebildet sind. Die Kanäle gehen dabei jeweils im Wesentlichen senkrecht (entlang einer zweiten Richtung y) von dem (entlang einer ersten Richtung x erstreckten) Eingangsbereich 2 ab. Sie umschließen dann, wie bereits beschrieben, innerhalb einer jeweiligen Kühlschleife 41, 42, 43 nebeneinander verlaufend, die zentrale Öffnung 40 der jeweiligen Kühlschleife 41, 42, 43 und münden, wiederum im Wesentlichen senkrecht (entlang der zweiten Richtung y), in den Ausgangsbereich 3 des Kühlkörpers 1. Letzterer erstreckt sich im Ausführungsbeispiel parallel zu dem Eingangsbereich 2 entlang der ersten Richtung x.

Durch die Ausbildung mehrerer einzelner Kanäle 401, 402, 403, 404, die in einer jeweiligen Kühlschleife 41, 42, 43 die zugehörige zentrale Öffnung 40 umschließen, wird der Druckabfall in den Kühlschleifen reduziert.

Weiterhin sind die Kanäle 401, 402, 403, 404 einer jeweiligen Kühlschleife 41, 42, 43 gemäß Figur 3 derart an den Ein- und Ausgangsbereich 2, 3 des Kühlkörpers 1 angeschlossen, dass benachbarte Kanäle 401, 402; 402, 403; 403, 404 jeweils in entgegengesetzter Richtung vom Kühlmittel durchströmt werden. Dies ist in Figur 3 durch Pfeile angedeutet, welche die Strömungsrichtung des Kühlmittels in den einzelnen Kanälen andeuten. Hierdurch wird der Temperaturgradient an der Oberfläche des Kühlkörpers 1 minimiert und eine gleichmäßige Kühlung des entsprechenden Spulenkörpers (S) erreicht.

In dem Ausgangsbereich 3 strömt das aus den Kühlschleifen 41, 42, 43 bzw. deren Kanälen ausgetretene Kühlmittel sodann entlang der ersten Richtung x zum Auslass 35, wo das Kühlmittel über eine an den entsprechenden Anschluss 34 angeschlossene Ableitung entnommen werden kann. Der Auslass 35 ist dabei an dem Kühlkörper 1 stirnseitig neben dem Einlass 25 angeordnet, entsprechend der benachbarten Anordnung des Eingangsbereiches 2 des Kühlkörpers 1 einerseits und des Ausgangsbereiches 3 andererseits.

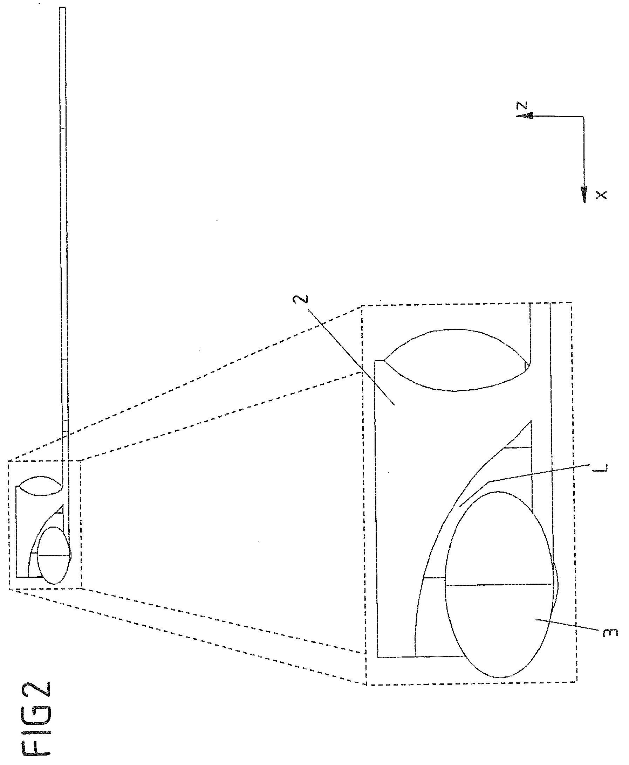

Wie insbesondere anhand der Stirnansicht gemäß Figur 2 deutlich wird, liegen der Ein- und Ausgangsbereich 2, 3 des Kühlkörpers 1 nebeneinander, ohne miteinander in Kontakt zu stehen. Vielmehr findet sich zwischen dem Ein- und Ausgangsbereich 2, 3 eine Lücke L, die zusätzlich mit einem nicht- bzw. schlecht wärmeleitenden Material gefüllt sein kann.

Hierdurch soll ein Wärmeübertrag zwischen dem Ausgangsbereich 3 und dem Eingangsbereich 2 des Kühlkörpers 1 vermieden werden. Insbesondere soll das im Eingangsbereich 2 befindliche, zur nachfolgenden Kühlung zu verwendende Kühlmittel nicht durch aus dem Ausgangsbereich 3 stammendes Kühlmittel erwärmt werden.

Zusammenfassend wird ein Kühlmittel in den Kühlkörper 1 zunächst über dessen Einlass 25 im Eingangsbereich 2 eingeleitet, wo es über die - durch das Kühlmittel gekühlte - Kontaktfläche 20 an einem mit dem (eisenlosen) Primärteil des Linearmotors zu verbindenden Objekt bzw. dessen Schnittstelle I anliegt. Aus dem Eingangsbereich 2 strömt das Kühlmittel in die Kanäle 401, 402, 403, 404 der seitlich vom Eingangsbereich abstehenden Kühlschleifen 41, 42, 43, wo das Kühlmittel zur Kühlung der Spulenanordnung S des Primärteiles genutzt wird. Aus den Kühlschleifen 41, 42, 43 gelangt das Kühlmittel in den Ausgangsbereich 3 des Kühlkörpers 1, welcher sich neben dem Eingangsbereich 2 (entlang einer ersten Richtung x) erstreckt, jedoch (in der Ebene yz senkrecht zur ersten Richtung x) von dem Eingangsbereich 2 beabstandet ist. Hierdurch tritt das Kühlmittel, welches sich zuvor zunächst im Eingangsbereich 2 und anschließend in den Kühlschleifen 41, 42, 43 erwärmt hat, nicht in wärmeleitenden Kontakt mit dem im Eingangsbereich 2 befindlichen Kühlmittel. Das Kühlmittel verlässt den Ausgangsbereich 3 schließlich über den dort vorgesehenen Auslass 35, welcher im Ausführungsbeispiel stirnseitig neben dem Einlass 25 angeordnet ist.

Die Strömungswege in dem Kühlkörper 1, insbesondere auch die Kanäle 401, 402, 403, 404 im Kühlkörper 1, sind dabei so ausgeführt, dass Hindernisse im Strömungsweg des Kühlmittels sowie Kurvenbahnen mit großer Krümmung (d. h. geringem Krümmungsradius) vermieden werden. Hierdurch wird der Druckabfall des Kühlmittels entlang seines Strömungsweges minimiert.

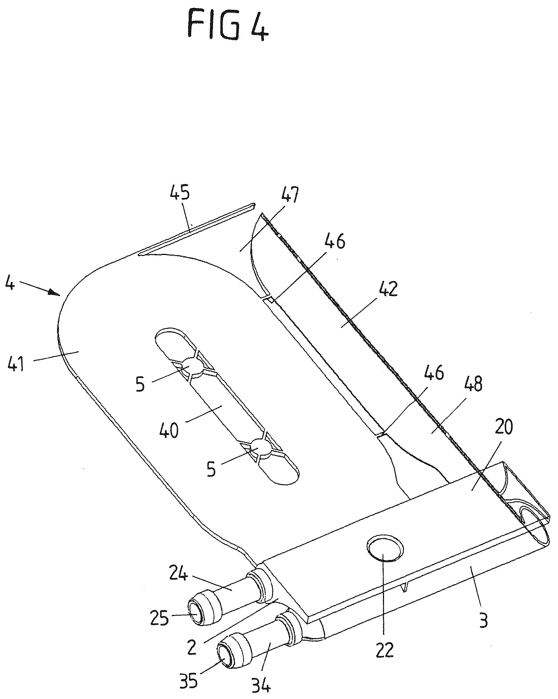

Figur 4 zeigt den Kühlkörper 1 aus den Figuren 1A, 1B und 3 bei der Herstellung durch 3D-Druck. Hierbei, wie auch bei anderen Herstellungsverfahren, die zur Herstellung eines einstückig geformten Kühlkörpers geeignet sind, werden die Herstellungskosten wesentlich durch die Materialkosten mitbestimmt. Um diese zu reduzieren, ist daher der Kühlkörper 1 möglichst dünnwandig ausgeführt. Weiterhin wird Material nur an solchen Stellen des Kühlkörpers eingesetzt, wo dies tatsächlich erforderlich ist. Bereiche 47, 48 zwischen den einzelnen Kühlschleifen 41, 42, 43 bleiben beispielsweise frei; und die Kühlschleifen 41, 42, 43 sind nur über dünne Stege 45, 46 miteinander verbunden. Radien am Kühlkörper 1 bzw. dessen Komponenten 2, 3, 4 sind dabei auf das gewählte Herstellungsverfahren abzustimmen.

Da es beim 3D-Druck schwierig ist, Hohlräume mit einer parallel zur Druckebene liegenden Wand zu schließen, können die entsprechenden Wände stattdessen gekrümmt ausgeführt werden, wie in Figur 4 erkennbar.

Die Figuren 5A und 5B zeigen nochmals eine Draufsicht sowie eine Seitenansicht des Kühlkörpers 1, jedoch mit detaillierterer Darstellung von (einstückig am Türkörper 1 bzw. genauer an jeweils einer Kühlschleife 41, 42 oder 43 angeformten) Befestigungselementen 5 zur Festlegung von Spulen einer Spulenanordnung am Kühlkörper 1 bzw. an dessen Kühlschleifen 41, 42, 43. Die (in den Figuren 5C und 5D zusätzlich in Einzeldarstellungen erkennbaren) Befestigungselemente 5 sind jeweils als Rastelemente ausgeführt. Sie weisen elastische Rastabschnitte 52, hier in Form von Rasthaken, auf, mit denen eine Rastverbindung zu einem Spulenkörper hergestellt werden kann. So können die Rastabschnitte 52 beispielsweise dazu dienen, den Rand einer Öffnung im jeweiligen Spulenkörper zu hintergreifen.

Die Rastabschnitte 52 stehen vorliegend von einem Grundkörper 50 eines jeweiligen Befestigungselementes 5 ab, welcher wiederum (über Stege 51) einstückig mit dem Kühlkörper 1 bzw. genauer mit je einer Kühlschleife 41, 42, 43 des Kühlkörpers 1 verbunden (insbesondere hieran angeformt) ist. Die Befestigungselemente 5 liegen dabei in den zentralen Öffnungen 40 der Kühlschleifen 41, 42, 43.

Mittels der elastischen Rastelemente lässt sich ein gewisser Anpressdruck der am Kühlkörper 1 festzulegenden Spulen des Primärteiles gegen den Kühlkörper 1 bzw. genauer gegen die Kühlschleifen 41, 42, 43 erzeugen. Hierdurch wird ein guter Wärmeübertrag zwischen der Spulenanordnung und dem Kühlkörper gewährleistet.

Anstelle der in den Figuren dargestellten Rastelemente können als Befestigungselemente an dem Kühlkörper 1 beispielsweise Befestigungsöffnungen (wie z.B. durch den Grundkörper 50 gebildet) vorgesehen sein, an denen sich ein Spulenkörper durch Befestigungsbolzen, z.B. in Form einer Schraube oder eines Stiftes, befestigen lässt.

## Patentansprüche

1. Kühlkörper für das Primärteil eines Linearmotors, welches eine Spulenanordnung (S) mit mindestens einer im Betrieb des Motors zu bestromenden Spule umfasst, wobei der Kühlkörper (1)
- zur Aufnahme der Spulenanordnung (S) des Primärteiles ausgebildet und vorgesehen ist,
- mindestens einen Kanal bildet, der im Betrieb des Kühlkörpers (1) von einem Kühlmittel durchströmt wird, und
- mindestens einen Einlass (25) sowie mindestens einen Auslass (35) für das Kühlmittel aufweist,
wobei der Kühlkörper (1) als ein einstückig geformtes Bauteil ausgeführt ist, das mit einer Schnittstelle (2, 20, 22) zur Anbindung eines mittels des Primärteils zu bewegenden Objektes versehen ist, die eine Kontaktfläche (20) umfasst, über welche das zu bewegende Objekt mit dem Kühlkörper (1) in Anlage zu bringen ist, und das zur Kühlung sowohl der Spulenanordnung (S) des Primärteiles als auch der Kontaktfläche (20) ausgebildet und vorgesehen ist, derart, dass dem Kühlkörper (1) durch den einen Einlass (25) zugeführtes Kühlmittel zur Kühlung der Spulenanordnung (S) und der Kontaktfläche (20) dient,
**dadurch gekennzeichnet,**
**dass** der Kühlkörper (1) so ausgeführt ist, dass in den Kühlkörper (1) eingelassenes Kühlmittel zunächst zur Kühlung der Kontaktfläche (20) und anschließend zur Kühlung der Spulenanordnung (S) des Primärteiles genutzt wird.

2. Kühlkörper nach Anspruch 1, **dadurch gekennzeichnet, dass** der Kühlkörper (1) eine Kühlplatte (4) zur Kühlung der Spulenanordnung (S) aufweist.

3. Kühlkörper nach Anspruch 1 oder 2, **dadurch gekennzeichnet, dass** der Kühlkörper (1) einstückig durch 3D-Druck hergestellt ist.

4. Kühlkörper nach einem der vorhergehenden Ansprüche, **dadurch gekennzeichnet, dass** der Kühlkörper (1) aus Metall, insbesondere Titan, besteht.

5. Kühlkörper nach einem der vorhergehenden Ansprüche, **dadurch gekennzeichnet, dass** der Kühlkörper (1) genau einen Einlass (24) für ein Kühlmittel und genau einen Auslass (34) für das Kühlmittel aufweist.

6. Kühlkörper nach einem der vorhergehenden Ansprüche, **dadurch gekennzeichnet, dass** im Bereich des Einlasses (25) für ein Kühlmittel und im Bereich des Auslasses (35) für das Kühlmittel jeweils ein Anschlusselement (24, 34) einstückig an dem Kühlkörper (1) angeformt ist, über welches eine Zuleitung für das Kühlmittel oder eine Ableitung für das Kühlmittel anschließbar ist.

7. Kühlkörper nach einem der vorhergehenden Ansprüche, **dadurch gekennzeichnet, dass** an dem Kühlkörper (1) Befestigungselemente (5) zur Festlegung einer Spulenanordnung (S) angeformt sind.

8. Kühlkörper nach einem der vorhergehenden Ansprüche, **dadurch gekennzeichnet, dass** der Kühlkörper (1) einen Eingangsbereich (2) aufweist, der mit einem Einlass (25) für ein Kühlmittel versehen ist, und weiterhin einen Ausgangsbereich (3) aufweist, der mit einem Auslass (35) für das Kühlmittel versehen ist.

9. Kühlkörper nach Anspruch 8, **dadurch gekennzeichnet, dass** der Eingangsbereich (2) und der Ausgangsbereich (3) jeweils entlang einer Richtung (x) längserstreckt ausgeführt sind und voneinander beabstandet angeordnet sind.

10. Kühlkörper nach Anspruch 9, **dadurch gekennzeichnet, dass** zwischen dem Eingangsbereich (2) und dem Ausgangsbereich (3) des Kühlkörpers (1) ein nicht oder schlecht wärmeleitendes Material angeordnet ist.

11. Kühlkörper nach einem der vorhergehenden Ansprüche, **dadurch gekennzeichnet, dass** die Kanäle (401, 402, 403, 404) des Kühlkörpers (1) eine Mehrzahl Kühlschleifen (41, 42, 43) bilden, von denen eine jede zur Kühlung einer Spule oder zweier einander gegenüberliegender, beidseits der jeweiligen Kühlschleife (41, 42, 43) angeordneter Spulen der Spulenanordnung (S) eines Primärteiles dient.

12. Kühlkörper nach Anspruch 8 und 11, **dadurch gekennzeichnet, dass** die Kanäle (401, 402, 403, 404) so an den Ein- und Ausgangsbereich (2, 3) des Kühlkörpers (1) angeschlossen sind, dass ein in den Kühlkörper (1) eingelassenes Kühlmittel benachbarte Kanäle (401, 402; 402, 403; 403, 404) jeweils in entgegengesetzter Richtung durchströmt.

13. Kühlkörper nach Anspruch 8 und Anspruch 11 oder 12, **dadurch gekennzeichnet, dass** die Kanäle (401, 402, 403, 404) jeweils mit einem ersten Endabschnitt im Wesentlichen senkrecht vom Eingangsbereich (2) des Kühlkörpers (1) abgehen und mit einem zweiten Endabschnitt im Wesentlichen senkrecht in den Ausgangsbereich (3) des Kühlkörpers (1) münden.

14. Linearmotor mit einem Primärteil, das eine Spulenanordnung (S) mit mindestens einer im Betrieb des Linearmotors elektrisch zu bestromenden Spule aufweist und das mit einer Schnittstelle (2, 20, 22) zur Anbindung eines mittels des Linearmotors zu bewegenden Objektes versehen ist, wobei das Primärteil weiterhin einen Kühlkörper nach mindestens einem der vorhergehenden Ansprüche aufweist, an welchem die Spulenanordnung festgelegt ist.

## Claims

1. Heat sink for the primary part of a linear motor, which primary part comprises a coil arrangement (S) with at least one coil to which current is to be supplied during operation of the motor, wherein the heat sink (1)
- is designed and provided for receiving the coil arrangement (S) of the primary part,
- forms at least one channel through which a coolant flows during operation of the heat sink (1), and
- has at least one inlet (25) and at least one outlet (35) for the coolant,
wherein the heat sink (1) is designed as an integrally formed component which is provided with an interface (2, 20, 22) for connection of an object which is to be moved by means of the primary part, which interface comprises a contact area (20) by means of which the object which is to be moved is to be brought into contact with the heat sink (1), and which component is designed and provided for cooling both the coil arrangement (S) of the primary part and the contact area (20) in such a way that coolant which is supplied to the heat sink (1) through the one inlet (25) serves to cool the coil arrangement (S) and the contact area (20),
**characterized**
**in that** the heat sink (1) is designed such that coolant which is admitted into the heat sink (1) is initially used to cool the contact area (20) and then to cool the coil arrangement (S) of the primary part.

2. Heat sink according to Claim 1, **characterized in that** the heat sink (1) has a cooling plate (4) for cooling the coil arrangement (S).

3. Heat sink according to Claim 1 or 2, **characterized in that** the heat sink (1) is integrally produced by 3D printing.

4. Heat sink according to one of the preceding claims, **characterized in that** the heat sink (1) consists of a metal, in particular titanium.

5. Heat sink according to one of the preceding claims, **characterized in that** the heat sink (1) has precisely one inlet (24) for a coolant and precisely one outlet (34) for the coolant.

6. Heat sink according to one of the preceding claims, **characterized in that** a respective connection element (24, 34) is integrally formed on the heat sink (1) in the region of the inlet (25) for a coolant and in the region of the outlet (35) for the coolant, it being possible for a supply line for the coolant or a discharge line for the coolant to be connected by means of said connection element.

7. Heat sink according to one of the preceding claims, **characterized in that** fastening elements (5) for fixing a coil arrangement (S) are integrally formed on the heat sink (1).

8. Heat sink according to one of the preceding claims, **characterized in that** the heat sink (1) has an input region (2) which is provided with an inlet (25) for a coolant, and further has an output region (3) which is provided with an outlet (35) for the coolant.

9. Heat sink according to Claim 8, **characterized in that** the input region (2) and the output region (3) are each designed in an elongate manner along a direction (x) and are arranged such that they are spaced apart from one another.

10. Heat sink according to Claim 9, **characterized in that** a material which is not thermally conductive or which is poorly thermally conductive is arranged between the input region (2) and the output region (3) of the heat sink (1).

11. Heat sink according to one of the preceding claims, **characterized in that** the channels (401, 402, 403, 404) in the heat sink (1) form a plurality of cooling loops (41, 42, 43), each of which serves to cool one coil or two coils of the coil arrangement (S) of a primary part which are situated opposite one another and are arranged on either side of the respective cooling loop (41, 42, 43).

12. Heat sink according to Claims 8 and 11, **characterized in that** the channels (401, 402, 403, 404) are connected to the input region and output region (2, 3) of the heat sink (1) such that a coolant which is admitted into the heat sink (1) flows through adjacent channels (401, 402; 402, 403; 403, 404) in the opposite direction in each case.

13. Heat sink according to Claim 8 and Claim 11 or 12, **characterized in that** the channels (401, 402, 403, 404) each exit substantially perpendicularly from the input region (2) of the heat sink (1) by way of a first end section and issue substantially perpendicularly into the output region (3) of the heat sink (1) by way of a second end section.

14. Linear motor comprising a primary part which has a coil arrangement (S) with at least one coil to which electric current is to be supplied during operation of the linear motor, and which primary part is provided with an interface (2, 20, 22) for connection of an object which is to be moved by means of the linear motor, wherein the primary part further has a heat sink according to at least one of the preceding claims to which the coil arrangement is fixed.

## Revendications

1. Corps de refroidissement pour la partie primaire d'un moteur linéaire qui comporte un agencement de bobine (S) avec au moins une bobine à alimenter en courant lors du fonctionnement du moteur, le corps de refroidissement (1)
- étant réalisé et prévu pour la réception de l'agencement de bobine (S) de la partie primaire,
- formant au moins un canal qui est traversé par un agent de refroidissement en fonctionnement du corps de refroidissement (1) et
- présentant au moins une entrée (25) ainsi qu'au moins une sortie (35) pour l'agent de refroidissement,
le corps de refroidissement (1) étant réalisé comme un composant formé d'un seul tenant qui est pourvu d'une interface (2, 20, 22) pour la liaison d'un objet à déplacer à l'aide de la partie primaire, laquelle comporte une surface de contact (20), par le biais de laquelle l'objet à déplacer doit être amené en appui avec le corps de refroidissement (1), et lequel composant est réalisé et prévu pour le refroidissement non seulement de l'agencement de bobine (S) de la partie primaire mais aussi de la surface de contact (20) de telle manière que de l'agent de refroidissement amené au corps de refroidissement (1) par l'une entrée (25) serve au refroidissement de l'agencement de bobine (S) et de la surface de contact (20),
**caractérisé en ce que**
le corps de refroidissement (1) est réalisé de sorte que de l'agent de refroidissement entré dans le corps de refroidissement (1) soit tout d'abord utilisé pour le refroidissement de la surface de contact (20) puis pour le refroidissement de l'agencement de bobine (S) de la partie primaire.

2. Corps de refroidissement selon la revendication 1, **caractérisé en ce que** le corps de refroidissement (1) présente une plaque de refroidissement (4) pour le refroidissement de l'agencement de bobine (S).

3. Corps de refroidissement selon la revendication 1 ou 2, **caractérisé en ce que** le corps de refroidissement (1) est fabriqué d'un seul tenant par impression 3D.

4. Corps de refroidissement selon l'une quelconque des revendications précédentes, **caractérisé en ce que** le corps de refroidissement (1) se compose de métal, en particulier de titane.

5. Corps de refroidissement selon l'une quelconque des revendications précédentes, **caractérisé en ce que** le corps de refroidissement (1) présente précisément une entrée (24) pour un agent de refroidissement et précisément une sortie (34) pour l'agent de refroidissement.

6. Corps de refroidissement selon l'une quelconque des revendications précédentes, **caractérisé en ce que** respectivement un élément de raccordement (24, 34) est formé d'un seul tenant sur le corps de refroidissement (1) dans la zone de l'entrée (25) pour un agent de refroidissement et dans la zone de la sortie (35) pour l'agent de refroidissement, par lequel élément de raccordement une conduite d'amenée pour l'agent de refroidissement ou une conduite d'évacuation pour l'agent de refroidissement peut être raccordée.

7. Corps de refroidissement selon l'une quelconque des revendications précédentes, **caractérisé en ce que** des éléments de fixation (5) sont formés sur le corps de refroidissement (1) pour la fixation d'un agencement de bobine (S).

8. Corps de refroidissement selon l'une quelconque des revendications précédentes, **caractérisé en ce que** le corps de refroidissement (1) présente une zone d'entrée (2) qui est pourvue d'une entrée (25) pour un agent de refroidissement et présente en outre une zone de sortie (3) qui est pourvue d'une sortie (35) pour l'agent de refroidissement.

9. Corps de refroidissement selon la revendication 8, **caractérisé en ce que** la zone d'entrée (2) et la zone de sortie (3) sont réalisées de manière étirée en longueur respectivement le long d'un sens (x) et sont agencées à distance l'une de l'autre.

10. Corps de refroidissement selon la revendication 9, **caractérisé en ce qu'**un matériau non thermoconducteur ou à basse thermoconduction est agencé entre la zone d'entrée (2) et la zone de sortie (3) du corps de refroidissement (1).

11. Corps de refroidissement selon l'une quelconque des revendications précédentes, **caractérisé en ce que** les canaux (401, 402, 403, 404) du corps de refroidissement (1) forment une pluralité de boucles de refroidissement (41, 42, 43), dont une sert au refroidissement d'une bobine ou de deux bobines en regard l'une de l'autre, agencées de part et d'autre de la boucle de refroidissement concernée (41, 42, 43) de l'agencement de bobine (S) d'une partie primaire.

12. Corps de refroidissement selon les revendications 8 et 11, **caractérisé en ce que** les canaux (401, 402, 403, 404) sont raccordés à la zone d'entrée et de sortie (2, 3) du corps de refroidissement (1) de sorte qu'un agent de refroidissement entré dans le corps de refroidissement (1) passe dans des canaux contigus (401, 402 ; 402, 403 ; 403, 404) respectivement dans le sens inverse.

13. Corps de refroidissement selon les revendications 8 et la revendication 11 ou 12, **caractérisé en ce que** les canaux (401, 402, 403, 404) sortent, respectivement avec une première section d'extrémité, sensiblement perpendiculairement de la zone d'entrée (2) du corps d'entrée (1) et débouchent, avec une seconde section d'extrémité, sensiblement perpendiculairement dans la zone de sortie (3) du corps de refroidissement (1).

14. Moteur linéaire avec une partie primaire qui présente un agencement de bobine (S) avec au moins une bobine à alimenter électriquement en fonctionnement du moteur linéaire et qui est pourvue d'une interface (2, 20, 22) pour la liaison d'un objet à déplacer à l'aide du moteur linéaire, la partie primaire présentant en outre un corps de refroidissement selon au moins l'une des revendications précédentes, sur lequel l'agencement de bobine est fixé.
